# EUROPEAN PATENT APPLICATION

(11) **EP 4 667 922 A1**
(43) Date of publication of application: **24.12.2025**
(21) Application number: 25181863.9
(22) Date of filing: 10.06.2025
(51) Int. Cl.: G01N 25/16, G01B 7/00, G01N 3/04, G01N 3/08, G01N 3/18, G01N 3/54

(54) **THERMAL ANALYZER**

(30) Priority: 21.06.2024 JP 2024100190
(71) Applicant: Hitachi High-Tech Analysis Corporation, Tokyo 105-6411 (JP)
(72) Inventor: KOBAYASHI, Kengo, Tokyo, 105-6411 (JP); OKANO, Yui, Tokyo, 105-6411 (JP); FUJIWARA, Hirohito, Tokyo, 105-6411 (JP); NAKAGAWA, Shuta, Tokyo, 105-6411 (JP)
(74) Representative: Zimmermann, Tankred Klaus

(57) **Abstract**

Proposed is a thermal analyzer that can suppress breakage due to falling of a probe and facilitates attachment and detachment in a structure in which a probe and a load transmission shaft connected to a load generator are detachable. The thermal analyzer includes a probe extending in an axial direction, a first end of the probe coming into direct or indirect contact with a sample to apply a load to the sample; a probe joint provided at a second end of the probe; a load generator; a load transmission shaft extending in the axial direction, having a first end directly or indirectly connected to the load generator and a second end at which a connecting joint is provided, the load transmission shaft configured to transmit the load from the load generator to the probe by connecting the connecting joint to the probe joint; a displacement detection mechanism configured to detect mechanical properties of the sample by detecting displacement of the probe in the axial direction; and a heating furnace , characterized in that at least one of the connecting joint and the probe joint has a magnet and, if one of the connecting joint and the probe joint does not have a magnet, the one of the connecting joint and the probe joint that does not have a magnet has an attraction member made of a paramagnetic material; and the probe joint and the connecting joint can be connected by force of attraction based on magnetic force between the magnets or between the magnet and the paramagnetic material.

## Description

### BACKGROUND

### Technical Field

The present disclosure relates to a thermal analyzer that measures thermal behavior of a sample.

### Description of the Related Art

In the related art, a technique called thermal analysis that heats a sample and measures thermal behavior (physical variations) of the measurement sample accompanying temperature variation has been used as a technique of evaluating the temperature characteristic of a sample. Thermal analysis is defined in "General rules for thermal analysis" in JIS K 0129:2005 and techniques of measuring physical properties of a measurement target (measurement sample) when the temperature of the measurement sample is controlled by a program are all called thermal analysis. For performing general thermal analysis, there are five methods, (1) differential thermal analysis (DTA) that detects a temperature (temperature difference), (2) differential scanning calorimetry (DSC) that detects a heat flow difference, (3) thermogravimetry (TG) that detects mass (weight variation), (4) thermomechanical analysis (TMA) that detects dynamic characteristics, and (5) dynamic mechanical analysis (DMA).

Among these techniques, thermomechanical analysis (TMA) and dynamic mechanical analysis (DMA) apply a load to a sample through a probe and detects shape variation of the sample at that time as displacement of the probe (e.g., see Patent Document 1). Accordingly, it is possible to measure the elastic modulus or expansion rate of the sample as a function of temperature or time.

In the thermal analyzer described in Patent Document 1, the operating shaft (load transmission shaft) for a load generator and a probe are detachably coupled by male and female threads.

### (Related Art Document)

### (Patent Document)

(Patent Document 1) Japanese Patent No. 3636110

### SUMMARY

However, quartz glass or ceramic, which are less prone to thermal expansion than metal, are often used as probes, but, in the case of a detachable structure of a probe to an operating shaft, there is a risk of the probe falling and breaking during attachment and detachment.

Further, it is difficult to screw an operating shaft and a probe together while holding the probe with one hand to prevent the probe from falling, and this task requires skill.

The present disclosure has been made in an effort to solve the problems described above and an objective of the present disclosure is to provide a thermal analyzer that can suppress breakage due to falling of a probe and facilitates attachment and detachment in a structure in which a probe and a load transmission shaft connected to a load generator are detachable.

In order to achieve the objectives, a thermal analyzer according to the present disclosure includes: a probe extending in an axial direction, a first end of the probe coming into direct or indirect contact with a sample to apply a load to the sample; a probe joint provided at a second end of the probe; a load generator configured to generate a load in the axial direction; a load transmission shaft extending in the axial direction, having a first end directly or indirectly connected to the load generator and a second end at which a connecting joint is provided, the load transmission shaft configured to transmit the load from the load generator to the probe by connecting the connecting joint to the probe joint; a displacement detection mechanism configured to detect mechanical properties of the sample by detecting displacement of the probe in the axial direction; and a heating furnace configured to heat the sample, characterized in that at least one of the connecting joint and the probe joint has a magnet and, if one of the connecting joint and the probe joint does not have a magnet, the one of the connecting joint and the probe join that does not have a magnet has an attraction member made of a paramagnetic material; and the probe joint and the connecting joint can be connected by force of attraction based on magnetic force between the magnets or between the magnet and the paramagnetic material.

In order to achieve the objectives, a thermal analyzer of a first aspect of the present disclosure includes: a probe extending in an axial direction, a first end of the probe coming into direct or indirect contact with a sample to apply a load to the sample; a probe joint provided at a second end of the probe; a load generator configured to generate a load in the axial direction; a load transmission shaft extending in the axial direction, having a first end directly or indirectly connected to the load generator and a second end at which a connecting joint is provided, the load transmission shaft configured to transmit the load from the load generator to the probe by connecting the connecting joint to the probe joint; a displacement detection mechanism configured to detect mechanical properties of the sample by detecting displacement of the probe in the axial direction; and a heating furnace configured to heat the sample, wherein each of the connecting joint and the probe joint has a permanent magnet as the magnet; and the probe joint and the connecting joint can be connected by force of attraction based on magnetic force between the permanent magnets.

According to this thermal analyzer, when the probe joint is mounted on the connecting joint, the permanent magnets are positioned in contact with or close to each other, and the connecting joint and the probe joint can be connected (attracted) by the force of attraction based on the magnetic force between the permanent magnets.

Accordingly, it is possible to suppress the probe from falling and being damaged when attaching and detaching the probe to and from the load transmission shaft. Further, it is not required to connect the load transmission shaft and the probe while holding the probe with one hand to prevent the probe from falling, so attachment and detachment can be easily achieved.

A thermal analyzer of a second aspect of the present disclosure includes: a probe extending in an axial direction, a first end of the probe coming into direct or indirect contact with a sample to apply a load to the sample; a probe joint provided at a second end of the probe; a load generator configured to generate a load in the axial direction; a load transmission shaft extending in the axial direction, having a first end directly or indirectly connected to the load generator and a second end at which a connecting joint is provided, the load transmission shaft configured to transmit the load from the load generator to the probe by connecting the connecting joint to the probe joint; a displacement detection mechanism configured to detect mechanical properties of the sample by detecting displacement of the probe in the axial direction; and a heating furnace configured to heat the sample, wherein one of the connecting joint and the probe joint has a permanent magnet as the magnet, the attraction member made of the paramagnetic material is provided at a position facing the permanent magnet on one of the connecting joint and the probe joint that does not have the permanent magnet; and the connecting joint and the probe joint can be connected by attraction of attraction based on magnetic force between the permanent magnet and the paramagnetic material.

According to this thermal analyzer, when the probe joint is mounted on the connecting joint, the permanent magnet and the attraction member are positioned in contact with or close to each other, and the connecting joint and the probe joint can be connected (attracted) by the force of attraction based on the magnetic force between the permanent magnet and the attraction member.

Accordingly, it is possible to suppress the probe from falling and being damaged when attaching and detaching the probe to and from the load transmission shaft. Further, it is not required to connect the load transmission shaft and the probe while holding the probe with one hand to prevent the probe from falling, so attachment and detachment can be easily achieved.

A thermal analyzer of a third aspect of the present disclosure includes: a probe extending in an axial direction, a first end of the probe coming into direct or indirect contact with a sample to apply a load to the sample; a probe joint provided at a second end of the probe; a load generator configured to generate a load in the axial direction; a load transmission shaft extending in the axial direction, having a first end directly or indirectly connected to the load generator and a second end at which a connecting joint is provided, the load transmission shaft configured to transmit the load from the load generator to the probe by connecting the connecting joint to the probe joint; a displacement detection mechanism configured to detect mechanical properties of the sample by detecting displacement of the probe in the axial direction; and a heating furnace configured to heat the sample, wherein the connecting joint has an electromagnet as the magnet, a permanent magnet or the attraction member made of the paramagnetic material is provided at a position facing the electromagnet on the probe joint, and the connecting joint and the probe joint can be connected by force of attraction based on magnetic force between the electromagnet and the permanent magnet or the paramagnetic material.

According to this thermal analyzer, when the probe joint is mounted on the connecting joint with electricity applied to the electromagnet, the electromagnet and the attraction member are positioned in contact with or close to each other, and the connecting joint and the probe joint can be connected (attracted) by the force of attraction based on the magnetic force between the electromagnet and the attraction member.

Accordingly, it is possible to suppress the probe from falling and being damaged when attaching and detaching the probe to and from the load transmission shaft. Further, it is not required to connect the load transmission shaft and the probe while holding the probe with one hand to prevent the probe from falling, so attachment and detachment can be easily achieved.

In a thermal analyzer of the present disclosure, a magnetic shield member may be provided between the connecting joint and both the load generator and the displacement detection mechanism along the axial direction.

According to this thermal analyzer, it is possible to suppress the magnetic force of the magnet in the connecting joint or the probe joint from interfering with the detection signal of the displacement detection mechanism and it is possible to suppress deterioration of the measurement precision.

A thermal analyzer of the present disclosure may further include a connecting mechanism configured to mechanically connect the connecting joint and the probe joint.

Connection of the connecting joint and the probe joint by the magnetic force of the permanent magnets or the electromagnet may be achieved by weak force of attraction at a level that prevents falling of the probe in attachment and detachment.

Accordingly, when connecting parts such as bolts for mechanically connecting the connecting joint and the probe joint are separately provided, it is possible to perform thermal analysis with the connecting joint and the probe joint firmly fixed by connecting parts.

In a thermal analyzer of the present disclosure, the probe may be made of quartz glass or ceramic and the probe joint may be made of metal or an alloy.

When the probe is made of quartz glass or ceramic, there is a risk of the probe falling and breaking during attachment and detachment, so the present disclosure is effective.

A thermal analyzer of a fourth aspect of the present disclosure includes: a probe extending in an axial direction, a first end of the probe coming into direct or indirect contact with a sample to apply a load to the sample; a probe joint disposed at a second end of the probe; a load generator configured to generate a load in the axial direction; a load transmission shaft extending in the axial direction, having a first end directly or indirectly connected to the load generator and a second end at which a connecting joint is provided, the load transmission shaft configured to transmit the load of the load generator to the probe by connecting the connecting joint to the probe joint; a displacement detection mechanism configured to detect mechanical properties of the sample by detecting displacement of the probe in the axial direction; and a heating furnace configured to heat the sample, wherein the connecting joint has a blind hole for inserting the probe joint and has a plunger configured to retractably protrude farther inward than an inner surface of the blind hole from outside in a radial direction crossing the axial direction; a concave portion recessed in the radial direction is provided at a portion of the probe joint that faces the plunger; and a front end of the plunger is fitted into the concave portion, making the connecting joint and the probe joint connectable.

According to this thermal analyzer, when the probe joint is mounted on the connecting joint, the front end of the plunger is fitted in the concave portion, so the connecting joint and the probe joint can be connected.

Accordingly, it is possible to suppress the probe from falling and being damaged when attaching and detaching the probe to and from the load transmission shaft. Further, it is not required to connect the load transmission shaft and the probe while holding the probe with one hand to prevent the probe from falling, so attachment and detachment can be easily achieved.

According to the present disclosure, a thermal analyzer that can suppress breakage due to falling of a probe and facilitates attachment and detachment in a structure in which a probe and a load transmission shaft connected to a load generator are detachable is obtained.

### BRIEF DESCRIPTION OF THE DRAWINGS

FIG. 1 is a view showing the configuration of a thermal analyzer according to an embodiment of a first aspect of the present disclosure;
FIG. 2 is a partial enlarged cross-sectional view of the portion near a connection joint and a probe joint of the embodiment of the first aspect of the present disclosure;
FIG. 3 is a partial enlarged cross-sectional view showing the configuration of a thermal analyzer according to an embodiment of a second aspect of the present disclosure;
FIG. 4 is a partial enlarged cross-sectional view showing the configuration of a thermal analyzer according to an embodiment of a third aspect of the present disclosure; and
FIG. 5 is a partial enlarged cross-sectional view showing the configuration of a thermal analyzer according to an embodiment of a fourth aspect of the present disclosure.

### DETAILED DESCRIPTION

Hereinafter, embodiments of the present disclosure are described with reference to the drawings.

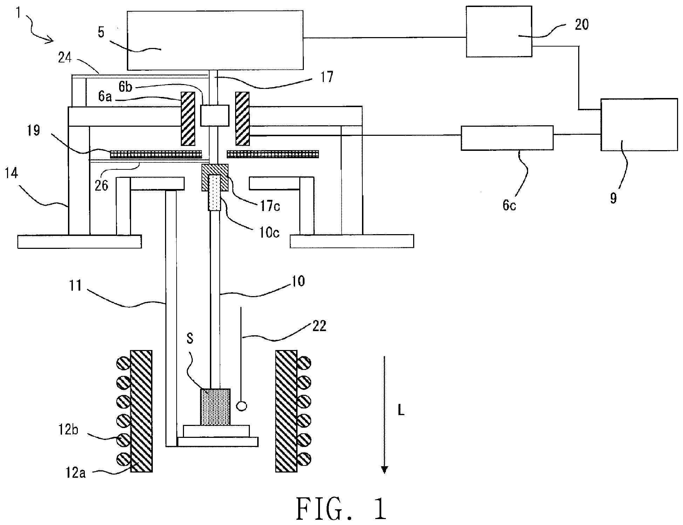

FIG. 1 is a view showing the configuration of a thermal analyzer (thermomechanical analysis (TMA) device) 1 according to an embodiment of a first aspect of the present disclosure.

A thermal analyzer 1 includes a rod-shaped probe 10 extending in an axial direction L (up-down direction in FIG. 1), a load generator 5 generating a load in the axial direction L, a load transmission shaft 17 connecting the load generator 5 and the probe 10, a displacement detection mechanism 6a ~ 6d detecting displacement of the probe 10 in the axial direction L, and a heating furnace 12a, 12b for heating a sample S.

Members of the thermal analyzer 1 are supported on a frame 14. Further, a sample holding member (sample tube) 11 moves down (toward a sample S) from the frame 14 and the sample S is placed on the horizontal surface of the sample holding member 11.

Further, in this embodiment, an end (lower end) of the probe 10 comes into direct contact with the upper end of the sample S to apply a load to the sample S.

Further, a thermocouple 22 for temperature measurement is disposed near the sample S.

The load transmission shaft 17 has a rod shape extending in the axial direction L, an upper end (first end) of the load transmission shaft 17 is fixed (connected) to the load generator 5 and a connecting joint 17c is disposed at a lower end (second end) thereof.

Though not shown, the load generator 5 includes a coil and a permanent magnet surrounding the coil, and when a current flows through the coil, a load is generated by displacement in the axial direction L.

The load transmission shaft 17 may be directly connected to the load generator 5 or may be indirectly to the load generator 5 (that is, the upper end (first end) of the load transmission shaft 17 may be connected to an intermediate shaft fixed to the load generator 5).

Meanwhile, a probe joint 10c is connected to a second end (upper end) of the probe 10 and the connecting joint 17c is connected to the probe joint 10c to transmit a load from the load generator 5 to the probe 10.

Further, the probe 10 and the load transmission shaft 17 are coaxially connected.

Further, a core (iron core) 6b made of conductive material is fixed on the outer circumferential surface of a portion of the load transmission shaft 17 between the connecting joint 17c and the load generator 5 in the axial direction L, and a differential transformer (primary coil and secondary coil) 6a is disposed around the core 6b. Further, a detector 6c detects the voltage of the differential transformer 6a.

Further, when the position of the core 6b (as a result, the probe 10) is changed with respect to the differential transformer 6a, a voltage is generated in the differential transformer 6a in response to the displacement, so the displacement of the core 6b (as a result, the probe 10) in the axial direction L can be detected.

The differential transformer 6a and the core 6b constitute a "displacement detection mechanism".

A heating furnace composed of a furnace body 12a and a heater 12b disposed around the furnace body 12a is provided around the sample S and the temperature of the heating furnace is controlled by a predetermined controller.

A load signal generator 20 generates a load signal for operating the load generator 5. The load signal generator 20 is, for example, an electronic circuit equipped with various electronic parts or chips on a circuit board.

An analog signal is generated to the load generator 5 from the load signal generator 20, whereby a predetermined load is generated.

The load generated by the load generator 5 is applied to the sample S through the load transmission shaft 17 and the probe 10.

Meanwhile, displacement of the sample S, etc. due to the load is transmitted to the core 6b through the probe 10 and the load transmission shaft 17 and is detected as a change of the position of the core 6b with respect to the differential transformer 6a.

A displacement detection signal by the differential transformer 6a and the core 6b is transmitted to the displacement detector 6c and is converted into a displacement signal.

A load signal that is output of a load detector 7 and a displacement signal that is output of the displacement detector 6c are transmitted to an arithmetic unit 9, so the physical quantity (mechanical properties) of the sample S is calculated.

Further, in this example, the probe 10 is made of quartz glass or ceramic in a rod shape and the probe joint 10c is made of metal, such as stainless steel or titanium, or an alloy in a rod shape. Further, the probe joint 10c is connected to an end of the probe 10 by an adhesive, etc.

Further, the load transmission shaft 17 and the connecting joint 17c are integrally made of metal, such as stainless steel or titanium, or an alloy.

Further, in this example, the load transmission shaft 17 is mounted on plate springs 24 and 26 extending in a lateral direction (perpendicular to the axial direction L) at two positions in the axial direction L.

Accordingly, the load transmission shaft 17, as a result, the probe 10 connected to the load transmission shaft 17 is moved only in the axial direction L and its movement in the lateral direction is restricted, so it is possible to prevent the probe 10 from unintentionally moving.

Next, features of the present disclosure are described.

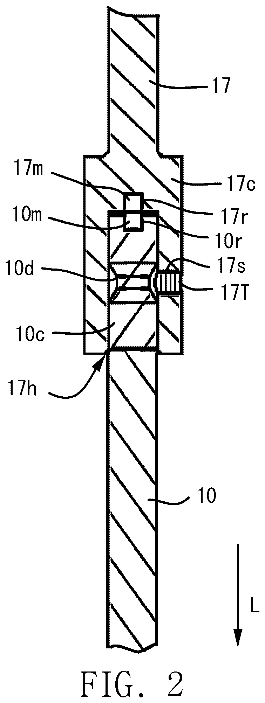

As shown in FIG. 2, in the thermal analyzer 1 of the first aspect of the present disclosure, the connecting joint 17c and the probe joint 10c both have permanent magnets 17m and 10m, respectively.

In detail, the connecting joint 17c has a cylindrical blind hole 17h extending in the axial direction L to insert the probe joint 10c. Further, a cylindrical accommodating hole 17r having a diameter smaller than the blind hole 17h is formed upward from the bottom of the blind hole 17h and the cylindrical permanent magnet 17m is embedded in the accommodating hole 17r and fixed thereby using an adhesive.

Meanwhile, an accommodating hole 10r that is a cylindrical blind hole is formed downward from the surface (top surface) of a second end (upper end) of the probe joint 10c and the cylindrical permanent magnet 10m is embedded in the accommodating hole 10r and fixed therein using an adhesive.

Further, when the probe joint 10c is inserted in the blind hole 17h, the permanent magnets 17m and 10m are positioned in contact with or close to each other, and the connecting joint 17c and the probe joint 10c can be connected (attracted) by the force of attraction based on the magnetic force between the permanent magnets 17m and 10m.

Accordingly, it is possible to suppress the probe 10 from falling and being damaged when attaching and detaching the probe 10 to and from the load transmission shaft 17.

Further, it is not required to connect the load transmission shaft 17 and the probe 10 while holding the probe 10 with one hand to prevent the probe 10 from falling, so attachment and detachment can be easily achieved.

Further, connection of the connecting joint 17c and the probe joint 10c by the magnetic force of the permanent magnets 17m and 10m may be achieved by weak force of attraction at a level that prevents falling of the probe 10 in attachment and detachment.

Accordingly, when connecting parts such as bolts for mechanically connecting the connecting joint 17c and the probe joint 10c are separately provided, it is possible to perform thermal analysis with the connecting joint 17c and the probe joint 10c firmly fixed by connecting parts.

The connecting mechanism may be, for example, as shown in FIG. 2, a structure of fastening a bolt 17T into a thread hole 17s extending in the radial direction crossing the axial direction L from the outer surface of the connecting joint 17c and formed through the blind hole 17h.

Further, a concave groove 10d recessed in the radial direction and extending around the entire probe joint 10c is formed opposite the head of the bolt 17T in the probe joint 10c. When the bolt 17T is fastened, the front end of the bolt 17T is fitted in the concave groove 10d, whereby the connecting joint 17c and the probe joint 10c can be mechanically connected.

The thread hole 17s, the bolt 17T, and the concave groove 10d corresponds to the "connecting mechanism" in claims.

Further, as shown in FIG. 1, in this embodiment, a magnetic shield member 19 is provided between the connecting joint 17c and both the load generator 5 and the displacement detection mechanism 6a, 6b along the axial direction L.

Accordingly, it is possible to suppress the magnetic force of the magnet in the connecting joint 17c or the probe joint 10c from interfering with the detection signal of the displacement detection mechanism 6a, 6b and it is possible to suppress deterioration of the measurement precision.

Iron, silicon steel, Permalloy, Permendur, etc. may be used as the magnetic shield member 19.

Further, since the detector 6c does not perform detection of displacement itself, the positional relationship with the magnetic shield member 19 is not important.

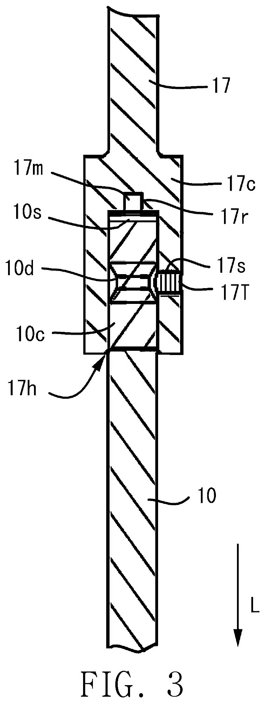

Next, a thermal analyzer of a second aspect of the present disclosure is described with reference to FIG. 3. The thermal analyzer of the second aspect is the same as the thermal analyzer of the first aspect except that the permanent magnet 10m of the probe joint 10c is replaced with an attraction member 10s made of a paramagnetic material in a disc shape, so the other configurations are not described.

As shown in FIG. 3, a disc-shaped attraction member 10s is bonded to the surface (top surface) of the second end (upper end) of the probe joint 10c using an adhesive.

Further, when the probe joint 10c is inserted in the blind hole 17h, the permanent magnet 17m and the attraction member 10s are positioned in contact with or close to each other, and the connecting joint 17c and the probe joint 10c can be connected (attracted) by the force of attraction based on the magnetic force between the permanent magnet 17m and the attraction member 10s.

Iron, silicon steel, Permalloy, Permendur, etc. may be used as the attraction member 10s.

Further, as another embodiment of the thermal analyzer of the second aspect, it may be possible to use a configuration in which the permanent magnet 17m of the connecting joint 17c is replaced with an attraction member made of a paramagnetic material and the attraction member 10s of the probe joint 10c is replaced with a permanent magnet.

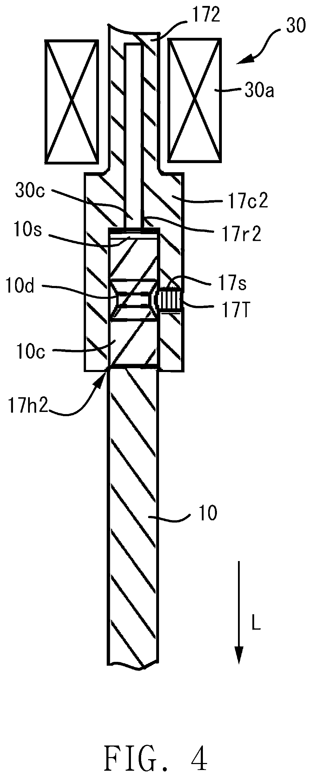

Next, a thermal analyzer of a third aspect of the present disclosure is described with reference to FIG. 4. The thermal analyzer of the third embodiment is the same as the thermal analyzer of the second embodiment except that the structure and material of the load transmission shaft 172 and the connecting joint 17c2 are changed and an electromagnet 30 is disposed around the connecting joint 17c2, so the other configurations are not described.

As shown in FIG. 4, a cylindrical accommodating hole 17r2 having a diameter smaller than the blind hole 17h is formed upward from the bottom of the blind hole 17h2 of the connecting joint 17c2 and a cylindrical core (iron core) 30c is embedded in the accommodating hole 17r2 and fixed therein using an adhesive.

Further, a coil 30a is disposed around the core 30c, so they constitute the electromagnet 30. Further, magnetic force is generated around the core 30c by applying electricity to the coil 30a.

Meanwhile, a disc-shaped attraction member 10s is bonded to the surface (top surface) of the second end (upper end) of the probe joint 10c using an adhesive.

Further, when the probe joint 10c is inserted in the blind hole 17h2 with electricity applied to the coil 30a, the core 30c and the attraction member 10s are positioned in contact with or close to each other, and the connecting joint 17c2 and the probe joint 10c can be connected (attracted) by the force of attraction based on the magnetic force between the core 30c and the attraction member 10s.

Further, the connecting joint 17c2 (and the load transmission shaft 172 integrated with the connecting joint 17c2) is made of a non-magnetic material such as Ti so that the magnetic field generated by the coil 30a reaches the core 30c.

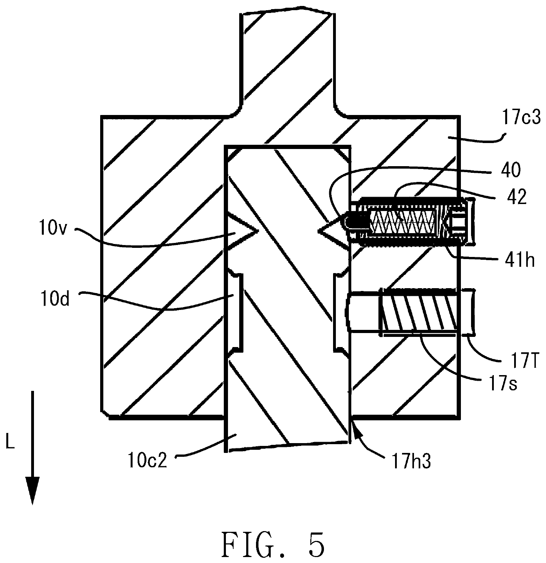

Next, a thermal analyzer of a fourth aspect of the present disclosure is described with reference to FIG. 5. The thermal analyzer of the fourth aspect is the same as the thermal analyzer of the first aspect except that the permanent magnets 17m and 10m are not used, the connecting joint 17c3 is equipped with a plunger 40, and the structure of the probe joint 10c2 is changed, so the other configurations are not described.

The connecting joint 17c3 has a blind hole 17h3 extending in the axial direction L to insert the probe joint 10c2.

Further, a plunger hole 41h is formed to the blind hole 17h3 in the radial direction crossing the axial direction L of the connecting joint 17c3. Further, a plunger 40 is disposed in the plunger hole 41h and a spring 42 is disposed in the base (outer portion in the radial direction) of the plunger 40 and elastically stretches and contracts in the radial direction.

Accordingly, as the plunger 40 radially moves in the plunger hole 41h, the front end of the plunger 40 can retract further inward than the inner surface of the blind hole 17h3.

Meanwhile, a concave portion 10v recessed in a wedge shape in the radial direction is formed at the portion of the probe joint 10c2 that faces the plunger 40 (the front end of the plunger 40).

Further, when the probe joint 10c2 is inserted in the blind hole 17h3, first, the outer surface of the probe joint 10c2 retracts the plunger 40 outward in the radial direction. Further, when the probe joint 10c2 is inserted up to the position where the plunger 40 faces the concave portion 10v, the front end of the plunger 40 protrudes inside farther than the inner surface of the blind hole 17h3 and is fitted into the concave portion 10v, whereby the connection joint 17c and the probe joint 10c2 can be connected.

Further, in this example, a connecting mechanism (a thread hole 17s, a bolt 17T, and a concave groove 10d), similar to FIG. 2, is provided farther at the front than the plunger 40.

The present disclosure is not limited to the embodiments described above.

For example, the shapes of the probe, the connecting joint, the probe joint, etc. are not limited.

### [Explanation of reference number]

- 1: thermal analyzer
- 5: load generator
- 6a, 6b: displacement detection mechanism
- 10: probe
- 10c, 10c2: probe joint
- 10v: concave portion
- 12a, 12b: heating furnace
- 17, 172: load transmission shaft
- 17c, 17c2, 17c3: connecting joint
- 10m, 17m: permanent magnet
- 10s: attraction member
- 19: magnetic shield member
- 10d, 17s, 17T: connecting mechanism
- 17h1~17h3: blind hole
- 30: electromagnet
- 40: plunger
- S: sample
- L: axial direction

## Claims

1. A thermal analyzer (1) comprising:
a probe (10) extending in an axial direction (L), a first end of the probe (10) coming into direct or indirect contact with a sample (S) to apply a load to the sample (S);
a probe joint (10c) provided at a second end of the probe (10);
a load generator (5) configured to generate a load in the axial direction (L);
a load transmission shaft (17, 172) extending in the axial direction (L), having a first end directly or indirectly connected to the load generator (5) and a second end at which a connecting joint (17c, 17c2) is provided, the load transmission shaft (17, 172) configured to transmit the load from the load generator (5) to the probe (10) by connecting the connecting joint (17c, 17c2) to the probe joint (10c);
a displacement detection mechanism (6a, 6b) configured to detect mechanical properties of the sample (S) by detecting displacement of the probe (10) in the axial direction (L); and
a heating furnace (12a, 12b ) configured to heat the sample,
**characterized in that** at least one of the connecting joint (17c, 17c2) and the probe joint (10c) has a magnet (10m, 17m, 30) and, if one of the connecting joint (17c, 17c2) and the probe joint (10c) does not have a magnet, the one of the connecting joint (17c, 17c2) and the probe joint (17c, 17c2) that does not have a magnet has an attraction member (10s) made of a paramagnetic material; and
the probe joint (10c) and the connecting joint (17c, 17c2) can be connected by force of attraction based on magnetic force between the magnets or between the magnet and the paramagnetic material.

2. The thermal analyzer according to claim 1,
wherein one of the connecting joint (17c) and the probe joint (10c) has a permanent magnet (10m, 17m) as the magnet;
the attraction member (10s) made of the paramagnetic material is provided at a position facing the permanent magnet (10m, 17m) on one of the connecting joint (17c) and the probe joint (10c) that does not have the permanent magnet; and
the connecting joint (17c) and the probe joint (10c) can be connected by force of attraction based on magnetic force between the permanent magnet and the paramagnetic material.

3. The thermal analyzer according to claim 1,
wherein the connecting joint (17c2) has an electromagnet (30) as the magnet,
a permanent magnet (10m, 17m) or the attraction member (10s) made of the paramagnetic material is provided at a position facing the electromagnet (30) on the probe joint (10c), and
the connecting joint (17c2) and the probe joint (10c) can be connected by force of attraction based on magnetic force between the electromagnet and the permanent magnet or the paramagnetic material.

4. The thermal analyzer according to any one of claim 1 to claim 3, wherein a magnetic shield member (19) is provided between the connecting joint (17c, 17c2) and both the load generator (5) and the displacement detection mechanism (6a, 6b) along the axial direction (L).

5. The thermal analyzer according to any one of claim 1 to claim 3, further comprising a connecting mechanism (10d, 17s, 17T) configured to mechanically connect the connecting joint (17c, 17c2) and the probe joint (10c).

6. The thermal analyzer according to any one of claim 1 to claim 3, wherein the probe (10) is made of quartz glass or ceramic and the probe joint (10c) is made of metal or an alloy.

7. A thermal analyzer (1) comprising:
a probe (10) extending in an axial direction (L), a first end of the probe (10) coming into direct or indirect contact with a sample (S) to apply a load to the sample (S);
a probe joint (10c2) disposed at a second end of the probe (10);
a load generator (5) configured to generate a load in the axial direction (L);
a load transmission shaft (17) extending in the axial direction (L), having a first end directly or indirectly connected to the load generator and a second end at which a connecting joint (17c3) is provided, the load transmission shaft (17) configured to transmit the load from the load generator (5) to the probe (10) by connecting the connecting joint (17c3) to the probe joint (10c2);
a displacement detection mechanism (6a, 6b) configured to detect mechanical properties of the sample (S) by detecting displacement of the probe (10) in the axial direction (L); and
a heating furnace (12a, 12b) configured to heat the sample (S),
wherein the connecting joint (17c3) has a blind hole (17h3) for inserting the probe joint (10c2) and has a plunger (40) configured to retractably protrude further inward than an inner surface of the blind hole (17h3) from outside in a radial direction crossing the axial direction (L);
a concave portion (10v) recessed in the radial direction is provided at a portion of the probe joint (10c2) that faces the plunger (40), and
a front end of the plunger (40) is fitted into the concave portion (10v), making the connecting joint (17c2) and the probe joint (10c2) connectable.
